# EUROPÄISCHE PATENTSCHRIFT

(11) **EP 3 191 323 B1**
(45) Veröffentlichungstag und Bekanntmachung des Hinweises auf die Patenterteilung: **28.08.2019**
(21) Anmeldenummer: 15759803.8
(22) Anmeldetag: 07.09.2015
(51) Int. Cl.: B60G 7/00

(54) **LENKERELEMENT**
SUSPENSION ARM ELEMENT
ÉLÉMENT DE BRAS DE SUSPENSION

(30) Priorität: 12.09.2014 DE 102014218315
(43) Veröffentlichungstag der Anmeldung: 19.07.2017
(73) Patentinhaber: SAF-HOLLAND GmbH, 63856 Bessenbach-Keilberg (DE)
(72) Erfinder: GALAZIN, Gregory, Muskegon, Michigan 49445 (US); JANSEN, Roger, Holton, Michigan 49425 (US)
(74) Vertreter: Müller Schupfner & Partner Patent- und Rechtsanwaltspartnerschaft mbB
(86) Internationale Anmeldenummer: PCT/EP2015/070373
(87) Internationale Veröffentlichungsnummer: WO 2016/037974

(56) Entgegenhaltungen:
- JP-A- H03 287 404
- US-A1- 2008 029 988
- US-A1- 2008 224 435

## Beschreibung

Die vorliegende Erfindung betrifft ein Lenkerelement, insbesondere zum Einsatz in Nutzfahrzeugen.

Lenkerelemente sind aus dem Stand der Technik bekannt. Dabei fungieren schwenkbar aufgehängte, im Wesentlichen balkenförmig ausgebildete Längslenker als Lagerung für eine Achse oder einen Achsstummel eines Nutzfahrzeug-Fahrwerkes. Diese Längslenker sind an ihrem ersten distalen Ende schwenkbar am Rahmen eines Nutzfahrzeuges festgelegt und an ihrem dem schwenkbaren Ende gegenüberliegenden Ende mit ein Tragabschnitt für ein Federelement versehen, wobei zwischen der schwenkbaren Lagerung und dem Federelement in der Regel ein Achsrohr oder eine Aufhängung für ein Fahrzeugrad angeordnet ist. Bei den aus dem Stand der Technik bekannten Lenkerelementen hat sich jedoch als nachteilig herausgestellt, dass zur Erreichung der erforderlichen Biegefestigkeit große Wandstärken der entsprechenden Abschnitte des Lenkerelements vorgesehen werden müssen und somit das Gewicht des Lenkerelements zur Erreichung einer vorgegebene Festigkeit gegen Verbiegung oder Torsion sehr hoch ist. Darüber hinaus sind die aus dem Stand der Technik bekannten Lenkerelemente in ihrer geometrischen Auslegung nicht zur Anbringung weiterer Komponenten des Fahrwerks geeignet. Es besteht daher ein Verbesserungsbedarf hinsichtlich der optimalen geometrischen Auslegung von Lenkerelementen und einer Optimierung des Verhältnisses der Festigkeit zum Gewicht des Lenkerelements.

Die US 2008/0029988 A1 zeigt einen mehrteiligen und aus Gussteilen herzustellenden Achslenker, dessen Einzelteile zu einem Kastenprofil zusammenschweißbar sind und welcher über Schweißfenster an einem Achsrohr eines Nutzfahrzeuges anschweißbar ist.

Die US 2008/0224435 A1 offenbart einen aus verschiedenen Blechteilen herstellbaren und insbesondere zusammenschweißbaren Längslenker, welcher um ein Achsrohr herum angeordnet und anschließend mit dem Achsrohr verschweißbar ist.

Die JP3-287404 offenbart einen als U-Profil im Querschnitt ausgebildetes Bauteil zum Einsatz in Fahrzeugen, wobei dieses insbesondere als Lenkstange oder beispielsweise als Stabilisatorelement im Fahrwerk eines Nutzfahrzeuges angewendet werden kann.

Die Dokumente DE 101 10 492 A1 und WO 2015/093346 A1 zeigen Lenkerelemente für Fahrzeuge.

Aufgabe der vorliegenden Erfindung ist die Bereitstellung eines Lenkerelements welches zum einen eine optimale geometrische Gestaltung aufweist und zum anderen ein verringertes Gewicht unter Beibehaltung der erforderlichen Festigkeit erlaubt.

Diese Aufgabe wird gelöst mit einem Lenkerelement gemäß Anspruch 1. Weitere Vorteile und Merkmale der Erfindung ergeben sich aus den abhängigen Ansprüchen.

Erfindungsgemäß umfasst das Lenkerelement einen ersten Wandbereich, einen zweiten Wandbereich und einen dritten Wandbereich, wobei das Lenkerelement einen Schwenkbereich zur schwenkbaren Lagerung um eine Schwenkachse aufweist, wobei sich der erste Wandbereich und der zweite Wandbereich eine im Wesentlichen parallel zu einer Querebene verlaufende Haupterstreckung aufweisen, wobei die Querebene orthogonal zur Schwenkachse steht, wobei der dritte Wandbereich im Wesentlichen längs einer Lateralebene von dem ersten Wandbereich und/oder von dem zweiten Wandbereich absteht, wobei die Lateralebene senkrecht zur Querebene ausgerichtet ist, wobei der dritte Wandbereich außermittig bezogen auf die Erstreckung des ersten Wandbereiches und/oder des zweiten Wandbereiches parallel zur Querebene angeordnet ist. Die Haupterstreckung des ersten und des zweiten Wandbereiches im Wesentlichen parallel oder entlang der Querebene bedeutet mit anderen Worten, dass der erste und der zweite Wandbereich ihre größte Erstreckung entlang oder parallel zu einer Querebene aufweisen. Quer zur Querebene ist die jeweilige Erstreckung des ersten und/oder des zweiten Wandbereiches vorzugsweise deutlich kleiner als die Haupterstreckung, besonders bevorzugt weniger als ein Viertel der Haupterstreckung parallel zur Querebene. Die Erstreckung des ersten und des zweiten Wandbereiches parallel zur Querebene bedeutet dabei vorzugsweise nicht, dass der erste und/oder der zweite Wandbereich auch parallel zur Querebene ausgebildet sein müssen. Vielmehr ist es bevorzugt, dass der erste und/oder der zweite Wandbereich eine Krümmung aufweisen, mit welcher sie von der Ausbildung parallel zur Querebene abweichen. Dabei können die Wandbereiche zwar eine gewisse Krümmung aufweisen, es ist aber bevorzugt, dass die maximale Abweichung des ersten und/oder des zweiten Wandbereiches von einer mittleren Erstreckung des jeweiligen Wandbereiches parallel zur Querebene, ein 0,1- bis 0,2-faches der Erstreckung des jeweiligen Wandbereiches parallel zur Schnittgeraden zwischen Lateralebene und Querebene nicht überschreitet. Mit anderen Worten ist ein möglicher Krümmungsradius eines Wandbereiches deutlich größer als die maximale Erstreckung des Wandbereiches. Vorzugsweise ist der Krümmungsradius dabei ein 5-bis 10-faches der maximalen Erstreckung des Wandbereiches parallel zur Schnittgeraden von Lateralebene und Querebene. Die Erstreckung des ersten und/oder des zweiten Wandbereiches quer zur Querrichtung ist mit anderen Worten vorzugsweise die Wandstärke des jeweiligen Wandbereiches. Der erste und der zweite Wandbereich sind vorzugsweise im Wesentlichen parallel zueinander ausgerichtet, wobei eine Krümmung des ersten oder des zweiten Wandbereiches bevorzugt im Rahmen dieser im Wesentlichen parallelen Ausbildung des ersten und/oder des zweiten Wandbereiches vorgesehen ist. Mit Vorteil erstreckt sich der dritte Wandbereich zwischen dem ersten und dem zweiten Wandbereich, wobei der dritte Wandbereich sich im Wesentlichen quer zur Querebene und somit vorzugsweise quer zum ersten und/oder zum zweiten Wandbereich erstreckt. Eine Erstreckung des dritten Wandbereiches im Wesentlichen längs der Lateralebene, umfasst auch eine Krümmung des dritten Wandbereiches, wobei die Haupterstreckungsrichtung des dritten Wandbereiches vorzugsweise längs oder parallel der Lateralebene verläuft. Der erste der zweite und der dritte Wandbereich bilden somit vorzugsweise einen H-förmigen Querschnitt, wobei jedoch der Querbalken des H's außermittig bezogen auf die beiden senkrechten Balken des H's angeordnet ist. Die außermittige Anordnung des dritten Wandbereiches am ersten und/oder am zweiten Wandbereich erlaubt mit Vorteil eine optimierte Ausnutzung des Bauraumes an dem Lenkerelement. Vorzugsweise kann in dem Bereich, welcher durch die außermittige Anordnung des dritten Wandbereiches zwischen dem ersten und dem zweiten Wandbereich frei ist, ein Stoßdämpfer angeordnet und am Lenkerelement festgelegt werden. Darüber hinaus optimiert die außermittige Anordnung des dritten Wandbereiches am ersten und/oder am zweiten Wandbereich das Flächenträgheitsmoment des Lenkerelements, so dass bei gleichem oder geringerem Gewicht des Lenkerelements höhere Biegemomente vom Lenkerelement aufgenommen und an den Rahmen bzw. die Achse des Nutzfahrzeuges weitergeleitet werden können.

Besonders bevorzugt erstreckt sich der erste Wandbereich mit einer ersten Höhe parallel zur Querebene, wobei der zweite Wandbereich sich mit einer zweiten Höhe parallel zur Querebene erstreckt, wobei der dritte Wandbereich ist im 0,1-bis 0,45-fachen, vorzugsweise 0,15-bis 0,3-fachen und besonders bevorzugt im ca. 0,2-fachen der ersten Höhe oder der zweiten Höhe am ersten Wandbereich und/oder am zweiten Wandbereich angeordnet ist. Im Rahmen der vorliegenden Erfindung soll der dritte Wandbereich also nicht auf der Hälfte der ersten und/oder der zweiten Höhe angeordnet werden, welches einer mittigen Anordnung des dritten Wandbereiches am ersten und/oder zweiten Wandbereich gleich käme. Vorzugsweise kann die absolute Höhe des ersten und/oder des zweiten Wandbereiches im Verlauf entlang des Lenkerelements ausgehend von der Schwenkachse variieren, wobei als erste Höhe und als zweite Höhe jeweils die Mittelwerte der jeweiligen Höhe des ersten und/oder des zweiten Wandbereiches im Verlauf entlang des Lenkerelements gewertet werden. Bevorzugt ist die erste Höhe gleich der zweiten Höhe, da auf diese Weise ein vorteilhaft gleichmäßiges Flächenträgheitsmoment am ersten und am zweiten Wandbereich erreichbar ist und Biegespannung ohne das Auftreten von Torsion aufgenommen wird. Die Höhe des ersten und des zweiten Wandbereiches wird vorzugsweise senkrecht zur Lateralebene und parallel zur Querebene gemessen. Die Anordnung des dritten Wandbereiches auf ca. einem Viertel der Höhe des ersten und/oder des zweiten Wandbereiches erlaubt zum einen die Ausnutzung des besonders günstigen Flächenträgheitsmoments eines annähernd H-förmigen Querschnitts. Zum anderen wird zwischen dem ersten und dem zweiten Wandbereich ein Freiraum über ca. drei Viertel der Höhe des ersten und/oder des zweiten Wandbereiches zur Festlegung weiterer Komponenten an dem Lenkerelement freigehalten. Der insbesondere bevorzugte Verhältnisbereich von einem ca. 0,2- fachen der Höhe des ersten und/oder zweiten Wandbereiches hat dabei in Versuchen der Anmelderin die besten Werte bezüglich einer hohen Biegefestigkeit bei geringem Gewicht und einer optimalen Bauraumverteilung am Lenkerelement gezeigt.

Besonders bevorzugt erstreckt sich der dritte Wandbereich mit einer dritten Höhe parallel zur Querebene. Die dritte Höhe des dritten Wandbereiches wird vorzugsweise senkrecht zur Lateralebene gemessen und ist vorzugsweise mit anderen Worten die Wandstärke des dritten Wandbereiches. Als dritte Höhe wird dabei vorzugsweise die mittlere Höhe, bzw. mittlere Wandstärke, des dritten Wandbereiches definiert, welche der Mittelwert einer gegebenenfalls variierenden Dicke oder dritten Höhe des dritten Wandbereiches im Verlauf parallel zur Lateralebene ist. Indem die dritte Höhe in einem Verhältnis von 0,01 bis 0,2 zur ersten Höhe und/oder zur zweiten Höhe gehalten wird, kann insbesondere das bei Verbiegung und Torsion des Lenkerelements wirkende Flächenträgheitsmoment ausreichend groß gehalten werden während gleichzeitig das Gewicht minimiert ist. Der besonders bevorzugte Bereich von 0,05 bis 0,15 erlaubt eine günstige Verteilung der durch das Lenkerelement aufgenommenen Kräfte und Momente auf die Wandbereiche wobei gleichzeitig auch eine optimale Bauraumausnutzung zwischen dem ersten und dem zweiten Wandbereich möglich ist. Der insbesondere bevorzugte Bereich von ca. 0,08 bis 0,1 hat in Versuchen der Anmelderin die die besten Werte bezüglich der Biegesteifigkeit und des gleichzeitig optimierten Gewichts offenbart.

Besonders bevorzugt weist das Lenkerelement eine Oberseite, eine Unterseite und einen Aufnahmebereich zur Festlegung eines Achsrohres auf, wobei die Oberseite und die Unterseite derart am Lenkerelement angeordnet sind, dass die Richtung der vom Achsrohr auf das Lenkerelement wirkenden Kraft im Wesentlichen von der Unterseite zu Oberseite verläuft, wobei der dritte Wandbereich näher an der Unterseite des Lenkerelements angeordnet ist als an dessen Oberseite. Die vom Achsrohr auf das Lenkerelement übertragene Kraft ist vorzugsweise die Stützkraft der an dem Achsrohr festgelegten Räder, welche über das Achsrohr und das Lenkerelement das Nutzfahrzeug tragen. Die von den Rädern auf das Nutzfahrzeug übertragene Kraft wirkt somit im Wesentlichen und in einem normalen Betriebszustand des Nutzfahrzeuges entgegen der Schwerkraft. Vorzugsweise ist das Lenkerelement am Nutzfahrzeug derart angeordnet, dass seine Unterseite zum Boden, auf dem das Nutzfahrzeug fährt, hin gewandt ist. Die Oberseite des Lenkerelements weist vorzugsweise zum Rahmen des Nutzfahrzeuges hin. Als normaler Betriebszustand des Nutzfahrzeuges wird insbesondere nicht ein Nutzfahrzeug im angehobenen Zustand, wie beispielsweise bei einer Verladung des Nutzfahrzeuges, definiert. Besonders bevorzugt ist der dritte Wandbereich näher an der Unterseite des Lenkerelements angeordnet, um oberhalb des dritten Wandbereiches einen möglichst großen Bauraum freizuhalten, welcher für die Anbringung zusätzlicher Bauteile an dem Lenkerelement geeignet ist.

Erfindungsgemäß weist der dritte Wandbereich eine Aussparung auf, welche sich im Wesentlichen längs der Lateralebene erstreckt. Die Aussparung am dritten Wandbereich dient insbesondere der Reduzierung des Gewichts des Lenkerelements. Dabei ist die Aussparung vorzugsweise derart angeordnet, dass die verbleibenden Bereiche des dritten Wandbereiches eine kraftflussoptimierte Geometrie aufweisen. Insbesondere ist die Aussparung vorzugsweise gerundet ausgebildet. Insbesondere bevorzugt kann die Aussparung zumindest abschnittsweise elliptisch ausgebildet sein.

Vorzugsweise weist die Aussparung eine maximale Aussparungserstreckung parallel zur Schwenkachse auf, wobei der erste Wandbereich und der zweite Wandbereich im Bereich der maximalen Aussparungserstreckung einen mittleren Wandabstand voneinander aufweisen, wobei die maximale Aussparungserstreckung in einem Verhältnis von 0,4 bis 0,9, vorzugsweise 0,6 bis 0,8, und besonders bevorzugt von ca. 0,75 bis 0,8 zum Wandabstand steht. Besonders bevorzugt wird der Wandabstand dabei parallel zur Schwenkachse gemessen und besonders bevorzugt im gleichen Abstand von der Schwenkachse wie die Aussparungserstreckung. Mit anderen Worten werden die Aussparungserstreckung und der Wandabstand vorzugsweise auf gleicher Höhe und besonders bevorzugt kollinear zueinander gemessen. Je größer dabei die Aussparungserstreckung ist, desto größer ist folglich die Schwächung des Materials des dritten Wandbereiches und somit des Lenkerelements. Gleichzeitig wird bei einer größeren Erstreckung der Aussparung das Gewicht des Lenkerelements reduziert. Der im Rahmen der vorliegenden Erfindung bevorzugte Bereich von 0,4 bis 0,9 umfasst dabei alle im Rahmen der vorliegenden Erfindung als vorteilhaft bestimmten Kompromisse zwischen einer Gewichtseinsparung und einer ausreichenden Festigkeit des Lenkerelements. Im besonders bevorzugten Verhältnisbereich von 0,6 bis 0,8 wurde im Rahmen von Versuchen der Anmelderin herausgefunden, dass die verbleibende Materialstärke des dritten Wandbereiches ausreichend ist und gleichzeitig das Gewicht des Lenkerelements im Vergleich zu aus dem Stand der Technik bekannten Lenkerelementen deutlich reduziert werden kann. Der besonders bevorzugte Verhältnisbereich von 0,75 bis 0,8 erlaubt den Einsatz des erfindungsgemäßen Lenkerelements in besonders hoch belasteten Nutzfahrzeugen bei welchen eine ausreichende Festigkeit des Lenkerelements zur Verfügung stehen muss und gleichzeitig das Gewicht gering gehalten werden soll.

In einer bevorzugten Ausführungsform weist der erste Wandbereich bereichsweise eine Krümmung auf, wobei eine erste Erstreckungsebene parallel zur Querebene derart angeordnet ist, dass eine erste maximale Abweichung des ersten Wandbereiches von der ersten Erstreckungsebene minimiert ist, wobei die erste maximale Abweichung in einem Verhältnis von 0,05 bis 0,3, vorzugsweise 0,1 bis 0,3, und besonders bevorzugt von ca. 0, 15 zu einer maximalen Gesamterstreckung des Lenkerelements parallel zur Schwenkachse steht. Insbesondere um das Lenkerelement optimal an den im Bereich des Fahrwerks des Nutzfahrzeuges vorhandenen Bauraum anzupassen, weist der erste Wandbereich vorzugsweise bereichsweise eine Krümmung auf. Als Maß für die Krümmung des ersten Wandbereiches ist dabei der maximale Abstand, mit anderen Worten die erste maximale Abweichung, des ersten Wandbereiches von einer ersten Erstreckungsebene definiert. Die erste Erstreckungsebene ist vorzugsweise die Ebene, welche parallel zur Querebene verläuft und derart angeordnet ist, dass sie den größtmöglichen Teil des ersten Wandbereiches schneidet bzw. mit diesem fluchtet. Die erste Erstreckungsebene verläuft somit vorzugsweise deckungsgleich zur mittleren Erstreckung des ersten Wandbereiches. Diese Lage der ersten Erstreckungsebene erreicht, dass die erste maximale Abweichung möglichst kleine Werte aufweist, wodurch die erste Erstreckungsebene vorzugsweise den größten Teil des ersten Wandbereiches schneidet. Die maximale Gesamterstreckung des Lenkerelements parallel zur Schwenkachse ist vorzugsweise die maximale Breite des Lenkerelements. Durch Auslegen der ersten maximalen Abweichung in einem Verhältnis von 0,05 bis 0,3 zur maximalen Gesamterstreckung des Lenkerelements ist vorzugsweise die Krümmung des ersten Wandbereiches derart ausgebildet, dass keine zu großen Biegemomente um die Längsachse des Lenkerelements wirken. Der bevorzugte Bereich von 0,1 bis 0,3 erlaubt einen ausreichenden Gestaltungsspielraum bei der Auslegung der Krümmung des Lenkerelements und gewährleistet gleichzeitig eine ausreichend hohe Festigkeit des Lenkerelements durch Vermeidung von quer zum Lenkerelement auftretenden Biegemomenten. Das insbesondere bevorzugte Verhältnis von ca. 0,15 erlaubt eine Krümmung des ersten Wandbereiches derart dass ein optimaler Kraftfluss von der schwenkbaren Lagerung des Lenkerelements hin zum Aufnahmebereich für ein Achsrohr möglich ist und gleichzeitig der Bauraum im Fahrwerksbereich optimal durch das Lenkerelement ausgenutzt wird.

In einer weiterhin bevorzugten Ausführungsform weist der zweite Wandbereich bereichsweise eine Krümmung auf, wobei eine zweite Erstreckungsebene parallel zur Querebene derart angeordnet ist, dass eine zweite maximale Abweichung des zweiten Wandbereiches von der zweiten Erstreckungsebene minimiert ist, wobei die zweite maximale Abweichung in einem Verhältnis von 0,05 bis 0,3, vorzugsweise 0,1 bis 0,3, und besonders bevorzugt von ca. 0, 15 zu einer maximalen Gesamterstreckung des Lenkerelements parallel zur Schwenkachse steht. Insbesondere um das Lenkerelement optimal an den im Bereich des Fahrwerks des Nutzfahrzeuges vorhandenen Bauraum anzupassen, weist der zweite Wandbereich vorzugsweise bereichsweise eine Krümmung auf. Als Maß für die Krümmung des zweiten Wandbereiches ist dabei der maximale Abstand, mit anderen Worten die zweite maximale Abweichung, des zweiten Wandbereiches von einer zweiten Erstreckungsebene definiert. Die zweite Erstreckungsebene ist vorzugsweise die Ebene, welche parallel zur Querebene verläuft und derart angeordnet ist, dass sie den größtmöglichen Teil des zweiten Wandbereiches schneidet bzw. mit diesem fluchtet. Die zweite Erstreckungsebene verläuft somit vorzugsweise deckungsgleich zur mittleren Erstreckung des zweiten Wandbereiches. Die maximale Gesamterstreckung des Lenkerelements parallel zur Schwenkachse ist somit vorzugsweise die maximale Breite des Lenkerelements. Zur weiteren Definition der zweiten Erstreckungsebene und der zweiten maximalen Abweichung können analog die Erläuterungen zur ersten Erstreckungsebene und zur maximalen ersten Abweichung angewandt werden. Durch Auslegen der zweiten maximalen Abweichung in einem Verhältnis von 0,05 bis 0,3 zur maximalen Gesamterstreckung des Lenkerelements ist vorzugsweise die Krümmung des zweiten Wandbereiches derart ausgebildet, dass keine zu großen Biegemomente um die Längsachse des Lenkerelements wirken. Der bevorzugte Bereich von 0,1 bis 0,3 erlaubt einen ausreichenden Gestaltungsspielraum bei der Auslegung der Krümmung des Lenkerelements und gewährleistet gleichzeitig eine ausreichend hohe Festigkeit des Len-kerelements durch Vermeidung von quer zum Lenkerelement auftretenden Biegemomenten. Das insbesondere bevorzugte Verhältnis von ca. 0,15 erlaubt eine Krümmung des zweiten Wandbereiches derart dass ein optimaler Kraftfluss von der schwenkbaren Lagerung des Lenkerelements hin zum Aufnahmebereich für ein Achsrohr möglich ist und gleichzeitig der Bauraum im Fahrwerksbereich optimal durch das Lenkerelement ausgenutzt wird.

Besonders bevorzugt sind der Schwenkbereich, der erste Wandbereich, der zweite Wandbereich und der dritte Wandbereich einstückig ausgebildet und vorzugsweise in einem Verfahrensschritt miteinander ausgebildet. Als Herstellungsverfahren für das Lenkerelement eignet sich insbesondere bevorzugt ein Gießverfahren, wobei das gesamte Lenkerelement vorzugsweise in einem Verfahrensschritt herstellbar ist. Auf diese Weise können insbesondere bevorzugt Fertigungskosten eingespart und die Herstellungszeit reduziert werden. Der erste, zweite und dritte Wandbereich können somit als einstückiges Gußteil ausgebildet sein.

Insbesondere bevorzugt weist das Lenkerelement einen als Aussparung ausgebildeten Fügebereich zur stoffschlüssigen Festlegung eines Achsrohres auf, wobei der Fügebereich an dem, dem Schwenkbereich gegenüber liegenden Ende des Lenkerelements vorgesehen ist. Der Fügebereich ist vorzugsweise eine augen- oder fensterförmige Aussparung am Lenkerelement, welche sich im Wesentlichen quer zur Querebene erstreckt. Im Fügebereich ist es vorzugsweise möglich, das Achsrohr mittels einer umlaufenden Schweißnaht an dem Lenkerelement stoffschlüssig festzulegen.

Weitere Vorteile und Merkmale ergeben sich aus der nachfolgenden Beschreibung ausgewählter Ausführungsformen mit Bezug auf die beigefügten Figuren. Es versteht sich, dass einzelne in ausgewählten Figuren offenbarte Merkmale auch in Ausführungsformen anderer Figuren zum Einsatz gelangen können, sofern dies nicht explizit ausgeschlossen wurde, oder sich aufgrund technischer Überlegungen verbietet. Es zeigen:
- Figur 1: eine perspektivische, teilweise geschnittene Ansicht einer bevorzugten Ausführungsform des erfindungsgemäßen Lenkerelements,
- Figur 2: eine Schnittansicht einer bevorzugten Ausführungsform des erfindungsgemäßen Lenkerelements,
- Figur 3: eine Seitenansicht einer bevorzugten Ausführungsform des erfindungsgemäßen Lenkerelements, und
- Figur 4: eine Draufsicht der in Figur 3 gezeigten bevorzugten Ausführungsform des erfindungsgemäßen Lenkerelements.

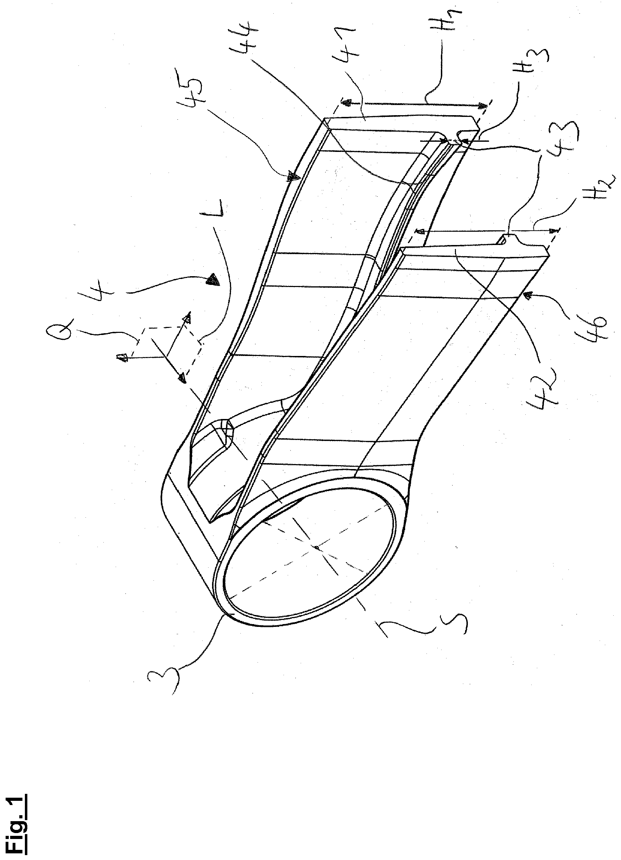

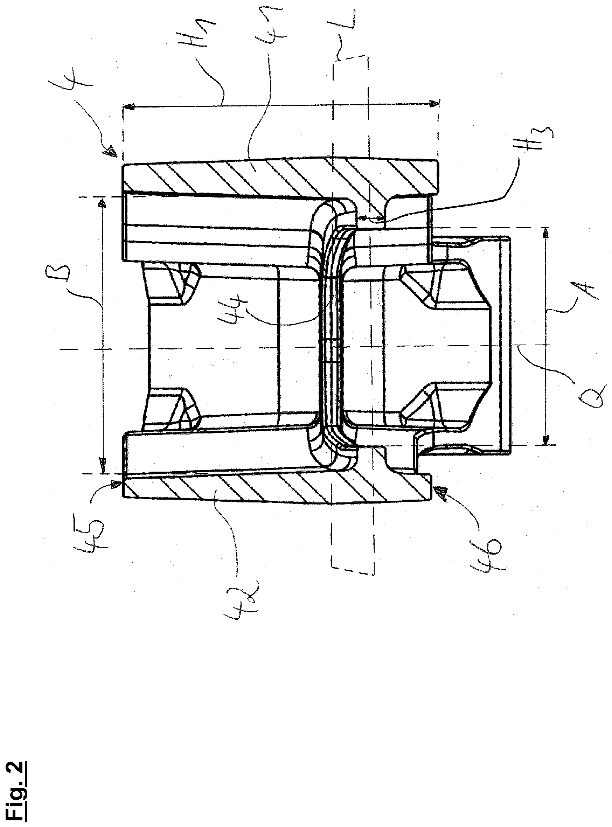

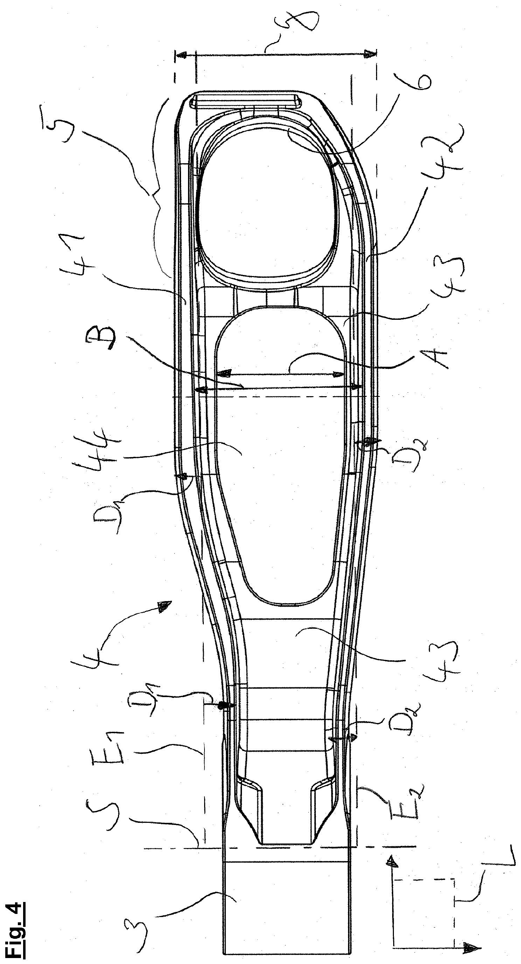

Das Lenkerelement 4, gezeigt in einer ersten bevorzugten Ausführungsform in Figur 1, weist einen Schwenkbereich 3 auf, welcher vorzugsweise als Lagerauge ausgebildet ist und eine schwenkbare Lagerung des Lenkerelements 4 um eine Schwenkachse S ermöglicht. Angrenzend an den Schwenkbereich 3 weist das Lenkerelement 4 einen ersten Wandbereich 41, einen zweiten Wandbereich 42 und einen dritten Wandbereich 43 auf. Der erste Wandbereich 41 und der zweite Wandbereich 42 erstrecken sich im Wesentlichen längs oder parallel zu einer Querebene Q, welche senkrecht zur Schwenkachse S steht. Der erste Wandbereich 41 und der zweite Wandbereich sind voneinander beabstandet, wobei der Abstand zwischen dem ersten und dem zweiten Wandbereich 41, 42 aufgrund einer bevorzugten Krümmung des ersten Wandbereiches 41 und/oder des zweiten Wandbereiches 42 variiert. Vorzugsweise sind der erste und der zweite Wandbereich 41, 42 um einen mittleren Wandabstand B (siehe Fig. 2 und Fig. 4) voneinander beabstandet. Der dritte Wandbereich 43 erstreckt sich im Wesentlichen längs oder parallel zu einer Lateralebene L und somit vorzugsweise im Wesentlichen quer, oder bevorzugt senkrecht zum ersten Wandbereich 41 und/oder zum zweiten Wandbereich 42. Im Bereich der Schnittebene in Figur 1 weist der dritte Wandbereich 43 eine Aussparung 44 auf. Weiterhin ist der dritte Wandbereich 43 nicht auf halber Höhe des ersten und/oder des zweiten Wandbereiches 41, 42 angeordnet. Mit anderen Worten ist der dritte Wandbereich 43 auf weniger als einer halben ersten Höhe H₁ und/oder einer halben zweiten Höhe H₂ am ersten Wandbereich 41 und am zweiten Wandbereich 42 angeordnet und mit diesem, vorzugsweise einstückig verbunden. In der bevorzugten Ausführungsform von Figur 1 ist der dritte Wandbereich 43 näher an der Unterseite 46 des Lenkerelements 4 angeordnet als an dessen Oberseite 45. Es wird vorzugsweise oberhalb des dritten Wandbereiches 43 und zwischen dem ersten und zweiten Wandbereich 41, 42 ein großer Bauraum zur Festlegung weiterer Bauteile an dem Lenkerelement 4 freigegeben. Weiterhin ist das Lenkerelement 4 mit diesem H-ähnlichen Querschnitt besonders gut an die einwirkenden Biegemomente angepasst. Der dritte Wandbereich 43 weist eine bevorzugte dritte Höhe H₃ auf, welche mit anderen Worten seine Wandstärke oder vorzugsweise Erstreckung quer zur Lateralebene L ist. Die dritte Höhe H₃ ist vorzugsweise ein ca. 0,09-faches der ersten Höhe H₁ und/oder der zweiten Höhe H₂.

Figur 2 zeigt eine Schnittansicht einer bevorzugten Ausführungsform des Lenkerelements 4. Dabei liegt die Schnittebene in dem Bereich des Lenkerelements 4, in welchem der dritte Wandbereich eine Aussparung 44 aufweist und insbesondere bevorzugt auf Höhe der maximalen Aussparungserstreckung A. Die Aussparungserstreckung A steht in der in Figur 2 gezeigten bevorzugten Ausführungsform in einem Verhältnis von ca. 0,75 bis 0,8 zum mittleren Wandabstand B des ersten und des zweiten Wandbereiches 41, 42 voneinander. Vorzugsweise ist die Oberseite 45 des Lenkerelements 4 im Wesentlichen parallel zur Unterseite 46 ausgerichtet, wobei besonders bevorzugt die Lateralebene L nicht parallel zur Oberseite 45 und Unterseite 46 ausgerichtet ist, sondern leicht verschwenkt. Somit erstreckt sich vorzugsweise auch der dritte Wandbereich 43 um einen Winkel von 1° bis 10° verschwenkt zur Oberseite 45 und/oder Unterseite 46 des Lenkerelements 4.

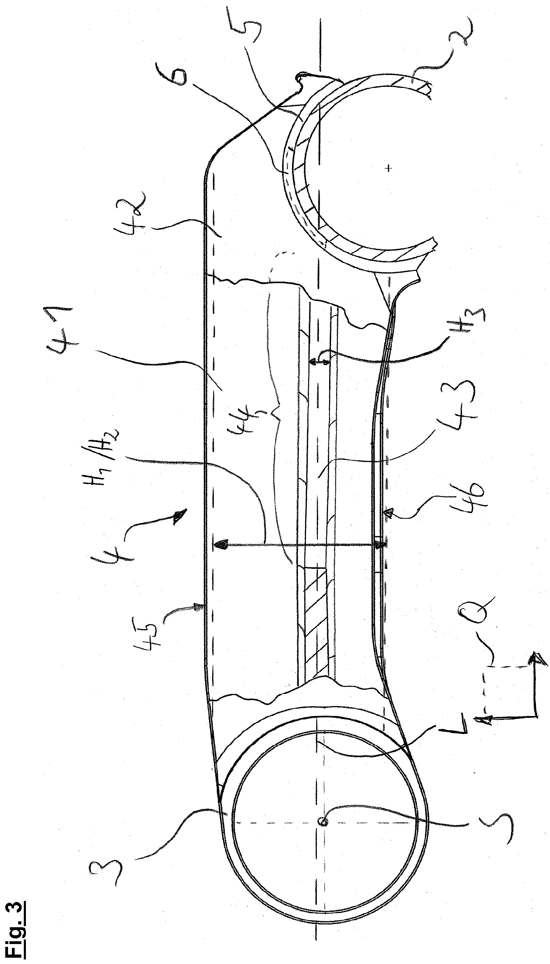

Figur 3 zeigt eine teilweise geschnittene Seitenansicht einer bevorzugten Ausführungsform des Lenkerelements 4. Dem Schwenkbereich 3 gegenüberliegend weist das Lenkerelement 4 vorzugsweise einen Aufnahmebereich 5 auf, in welchem ein Achsrohr 2 an dem Lenkerelement 4 angeordnet und in einem Fügebereich 6 (gestrichelt) mit dem Lenkerelement 4 verschweißt werden kann. Der Fügebereich 6 ist dabei vorzugsweise als Aussparung ausgebildet, an deren umlaufendem Rand eine Schweißnaht zwischen dem Lenkerelement 4 und dem Achsrohr 2 herstellbar ist.

Figur 4 zeigt eine Draufsicht auf eine bevorzugte Ausführungsform des Lenkerelements 4, wobei die bevorzugte gekrümmte Form des ersten Wandbereiches 41 und des zweiten Wandbereiches 42 verdeutlicht ist. Der erste Wandbereich 41 erstreckt sich dabei im Wesentlichen längs einer ersten Erstreckungsebene E₁, welche derart senkrecht zur Schwenkachse S und bezogen auf den ersten Wandbereich 41 liegt, dass die erste maximale Abweichung D₁, bzw. das maximale Herausragen des ersten Wandbereiches 41 von der ersten Erstreckungsebene E₁ minimiert ist. Analog hierzu erstreckt sich der zweite Wandbereich 42 im Wesentlichen längs einer zweiten Erstreckungsebene E₂, welche derart senkrecht zur Schwenkachse S und bezogen auf den zweiten Wandbereich 42 liegt, dass die zweite maximale Abweichung D₂, bzw. das maximale Herausragen des zweiten Wandbereiches 42 von der zweiten Erstreckungsebene E₂ minimiert ist. Vorzugsweise ist die erste maximale Abweichung D₁ kleiner oder größer als die zweite maximale Abweichung D₂. Mit anderen Worten sind somit der erste und der zweite Wandbereich 41, 42 vorzugsweise verschieden stark gekrümmt. Die Aussparung 44 des dritten Wandbereiches 43 weist eine vorzugsweise gerundete und von der Kreisform abweichende Geometrie auf. Besonders bevorzugt weist auch der im Aufnahmeabschnitt 5 vorgesehene, als Aussparung ausgebildete Fügebereich 6 eine von der Kreisform abweichende, gerundete Geometrie auf. Durch die spezielle Geometrie der Aussparung 44 des dritten Wandbereiches 43 kann insbesondere das Gewicht des Lenkerelements 4 reduziert werden, da die Aussparung 44 optimal an die zu übertragenden Kräfte und Momente anpassbar ist und immer genügend stützendes Material des dritten Wandbereiches 43 verbleibt. Das Lenkerelement 4 weist vorzugsweise eine Gesamterstreckung G auf, welche als seine maximale, parallel zur Schwenkachse gemessene Erstreckung definiert ist.

Bezugszeichen:
- 2: - Achsrohr
- 3: - Schwenkbereich
- 4: - Lenkerelement
- 5: - Aufnahmeabschnitt
- 6: - Fügebereich
- 41: - erster Wandbereich
- 42: - zweiter Wandbereich
- 43: - dritter Wandbereich
- 44: - Aussparung
- 45: - Oberseite
- 46: - Unterseite
- A: - Aussparungserstreckung
- B: - mittlerer Wandabstand
- D₁: - erste maximale Abweichung
- D₂: - zweite maximale Abweichung
- E₁: - erste Erstreckungsebene
- E₂: - zweite Erstreckungsebene
- G: - maximalen Gesamterstreckung
- H₁: - erste Höhe
- H₂: - zweite Höhe
- H₃: - dritte Höhe
- L: - Lateralebene
- Q: - Querebene
- S: - Schwenkachse

## Patentansprüche

1. Lenkerelement (4), insbesondere zum Einsatz in Nutzfahrzeugen, umfassend einen ersten Wandbereich (41), einen zweiten Wandbereich (42) und einen dritten Wandbereich (43),
wobei das Lenkerelement (4) einen Schwenkbereich (3) zur schwenkbaren Lagerung um eine Schwenkachse (S) aufweist,
wobei der erste Wandbereich (41) und der zweite Wandbereich (42) eine im Wesentlichen parallel zu einer Querebene (Q) verlaufende Haupterstreckung aufweisen,
wobei die Querebene (Q) orthogonal zur Schwenkachse (S) steht,
wobei der dritte Wandbereich (43) im Wesentlichen längs einer Lateralebene (L) von dem ersten Wandbereich (41) und/oder von dem zweiten Wandbereich (42) absteht, und
wobei die Lateralebene (L) senkrecht zur Querebene (Q) ausgerichtet ist, wobei der dritte Wandbereich (43) außermittig bezogen auf die Erstreckung des ersten Wandbereichs (41) und/oder des zweiten Wandbereichs (42) angeordnet ist,
**dadurch gekennzeichnet, dass** der dritte Wandbereich (43) eine Aussparung (44) aufweist, welche sich im Wesentlichen längs der Lateralebene (L) erstreckt.

2. Lenkerelement (4) nach Anspruch 1,
wobei der erste Wandbereich (41) sich mit einer ersten Höhe (H₁) parallel zur Querebene (Q) erstreckt,
wobei sich der zweite Wandbereich (42) mit einer zweiten Höhe (H₂) parallel zur Querebene (Q) erstreckt,
wobei der dritte Wandbereich (43) im 0,1- bis 0,45-fachen, vorzugsweise im 0,15- bis 0,3-fachen und besonders bevorzugt im ca. 0,2-fachen der ersten Höhe (H₁) oder zweiten Höhe (H₂) am ersten Wandbereich (41) angeordnet ist.

3. Lenkerelement (4) nach Anspruch 2,
wobei sich der dritte Wandbereich (43) mit einer dritten Höhe (H₃) parallel zur Querebene (Q) erstreckt,
wobei die dritte Höhe (H₃) in einem Verhältnis von 0,01 bis 0,2, vorzugsweise 0,05 bis 0,15 und besonders bevorzugt ca. 0,08 bis 0,1 zur ersten Höhe (H₁) und/oder zur zweiten Höhe (H₂) steht.

4. Lenkerelement (4) nach einem der vorhergehenden Ansprüche, aufweisend eine Oberseite (45) und eine Unterseite (46) und einen Aufnahmebereich (5) zur Festlegung eine Achsrohres (2) aufweist,
wobei die Oberseite (45) und die Unterseite (46) derart am Lenkerelement (4) angeordnet sind, dass die Richtung der vom Achsrohr (2) auf das Lenkerelement (4) wirkenden Kraft im Wesentlichen von der Unterseite (46) zur Oberseite (45) verläuft,
wobei der dritte Wandbereich (43) näher an der Unterseite (46) des Lenkerelements (4) als an dessen Oberseite (45) angeordnet ist.

5. Lenkerelement (4) nach einem der vorhergehenden Ansprüche,
wobei die Aussparung (44) eine maximale Aussparungserstreckung (A) parallel zur Schwenkachse (S) aufweist,
wobei der erste Wandbereich (41) und der zweite Wandbereich (42) im Bereich der maximalen Aussparungserstreckung (A) einen mittleren Wandabstand (B) voneinander aufweisen,
wobei die maximale Aussparungserstreckung (A) in einem Verhältnis von 0,4 bis 0,9, vorzugsweise 0,6 bis 0,8 und besonders bevorzugt von ca. 0,75 bis 0,8 zum Wandabstand (B) steht.

6. Lenkerelement (4) nach einem der vorhergehenden Ansprüche,
wobei der erste Wandbereich (41) bereichsweise eine Krümmung aufweist,
wobei eine erste Erstreckungsebene (E₁) parallel zur Querebene (Q) und derart angeordnet ist, dass eine erste maximale Abweichung (D₁) des ersten Wandbereiches (41) von der ersten Erstreckungsebene (E₁) minimiert ist, wobei die erste maximale Abweichung (D₁) in einem Verhältnis von 0,05 bis 0,3, vorzugsweise 0,1 bis 0,3 und besonders bevorzugt von ca. 0,15 zu einer maximalen Gesamterstreckung (G) des Lenkerelements (4) parallel zur Schwenkachse (S) steht.

7. Lenkerelement (4) nach Anspruch 6,
wobei der zweite Wandbereich (42) bereichsweise eine Krümmung aufweist,
wobei eine zweite Erstreckungsebene (E₂) parallel zur Querebene (Q) und derart angeordnet ist, dass eine zweite maximale Abweichung (D₂) des zweiten Wandbereiches (42) von der zweiten Erstreckungsebene (E₂) minimiert ist,
wobei die zweite maximale Abweichung (D₂) in einem Verhältnis von 0,05 bis 0,3, vorzugsweise 0,1 bis 0,3 und besonders bevorzugt von ca. 0,15 zur maximalen Gesamterstreckung (G) steht.

8. Lenkerelement (4) nach einem der vorhergehenden Ansprüche,
wobei der Schwenkbereich (3) und die Wandbereiche (41, 42, 43) einstückig ausgebildet, und vorzugsweise in einem Verfahrensschritt miteinander ausgebildet sind.

9. Lenkerelement (4) nach einem der vorhergehenden Ansprüche, aufweisend einen als Aussparung ausgebildeten Fügebereich (6) zur stoffschlüssigen Festlegung eines Achsrohres (2),
wobei der Fügebereich (6) an dem, dem Schwenkbereich (3) gegenüber liegenden Ende des Lenkerelements (4) vorgesehen ist.

## Claims

1. A link element (4), in particular for use in utility vehicles, comprising a first wall region (41), a second wall region (42) and a third wall region (43),
wherein the link element (4) has a pivot region (3) for pivotable support about a pivot axis (S),
wherein the first wall region (41) and the second wall region (42) have a main extent which extends substantially parallel with a transverse plane (Q),
wherein the transverse plane (Q) is orthogonal to the pivot axis (S),
wherein the third wall region (43) protrudes substantially along a lateral plane (L) from the first wall region (41) and/or from the second wall region (42),
wherein the lateral plane (L) is orientated perpendicularly to the transverse plane (Q), and
wherein the third wall region (43) is arranged eccentrically with respect to the extent of the first wall region (41) and/or the second wall region (42),
**characterized in that** the third wall region (43) has a recess (44) which extends substantially along the lateral plane (L).

2. The link element (4) as claimed in claim 1,
wherein the first wall region (41) extends at a first height (H1) parallel with the transverse plane (Q),
wherein the second wall region (42) extends parallel with the transverse plane (Q) at a second height (H2),
wherein the third wall region (43) is arranged at from 0.1 to 0.45 times, preferably from 0.15 to 0.3 times and particularly preferably at approximately 0.2 times the first height (H1) or the second height (H2) on the first wall region (41).

3. The link element (4) as claimed in claim 2,
wherein the third wall region (43) extends at a third height (H3) parallel with the transverse plane (Q),
wherein the third height (H3) is in a ratio of from 0.01 to 0.2, preferably from 0.05 to 0.15 and particularly preferably approximately 0.08 to 0.1 to the first height (H1) and/or the second height (H2).

4. The link element (4) as claimed in one of the preceding claims,
having an upper side (45) and a lower side (46) and a receiving region (5) in order to fix an axle tube (2),
wherein the upper side (45) and the lower side (46) are arranged on the link element (4) in such a manner that the direction of the force acting from the axle tube (2) on the link element (4) extends substantially from the lower side (46) to the upper side (45),
wherein the third wall region (43) is arranged nearer the lower side (46) of the link element (4) than the upper side (45) thereof.

5. The link element (4) as claimed in one of the preceding claims,
wherein the recess (44) has a maximum recess extent (A) parallel with the pivot axis (S),
wherein the first wall region (41) and the second wall region (42) in the region of the maximum recess extent (A) have a mean wall spacing (B) from each other,
wherein the maximum recess extent (A) is in a ratio of from 0.4 to 0.9, preferably from 0.6 to 0.8 and particularly preferably from approximately 0.75 to 0.8 to the wall spacing (B).

6. The link element (4) as claimed in one of the preceding claims,
wherein the first wall region (41) partially has a curvature,
wherein a first extent plane (E₁) is arranged parallel with the transverse plane (Q) and in such a manner that a first maximum deviation (D₁) of the first wall region (41) from the first extent plane (E₁) is minimized,
wherein the first maximum deviation (D₁) is in a ratio of from 0.05 to 0.3, preferably from 0.1 to 0.3 and particularly preferably of approximately 0.15 to a maximum total extent (G) of the link element (4) parallel with the pivot axis (S).

7. The link element (4) as claimed in claim 6,
wherein the second wall region (42) partially has a curvature,
wherein a second extent plane (E₂) is arranged parallel with the transverse plane (Q) and in such a manner that a second maximum deviation (D₂) of the second wall region (42) from the second extent plane (E2) is minimized,
wherein the second maximum deviation (D₂) is in a ratio of from 0.05 to 0.3, preferably from 0.1 to 0.3 and particularly preferably of approximately 0.15 to the maximum total extent (G).

8. The link element (4) as claimed in one of the preceding claims,
wherein the pivot region (3) and the wall regions (41, 42, 43) are constructed integrally and are preferably constructed in one method step with each other.

9. The link element (4) as claimed in one of the preceding claims,
having a joint region (6) which is constructed as a recess for fixing an axle tube (2) in a materially engaging manner,
wherein the joint region (6) is provided at the end of the link element (4) opposite the pivot region (3).

## Revendications

1. Élément formant bras oscillant (4) destiné en particulier à l'utilisation dans des véhicules utilitaires, comportant une première zone de paroi (41), une seconde zone de paroi (42) et une troisième zone de paroi (43),
dans lequel
l'élément formant bras oscillant (4) présente une zone basculante (3) pour le montage en basculement autour d'un axe de basculement (S),
la première zone de paroi (41) et la seconde zone de paroi (42) présentent une extension principale qui s'étend sensiblement parallèlement à un plan transversal (Q),
le plan transversal (Q) est orthogonal à l'axe de basculement (S),
la troisième zone de paroi (43) fait saillie de la première zone de paroi (41) et/ou de la seconde zone de paroi (42) sensiblement le long d'un plan latéral (L), et
le plan latéral (L) est orienté perpendiculairement au plan transversal (Q),
la troisième zone de paroi (43) est disposée de façon excentrée par rapport à l'extension de la première zone de paroi (41) et/ou de la seconde zone de paroi (42),
**caractérisé en ce que**
la troisième zone de paroi (43) présente une échancrure (44) qui s'étend sensiblement le long du plan latéral (L).

2. Élément formant bras oscillant (4) selon la revendication 1,
dans lequel
la première zone de paroi (41) s'étend avec une première hauteur (H₁) parallèlement au plan transversal (Q),
la seconde zone de paroi (42) s'étend avec une seconde hauteur (H₂) parallèlement au plan transversal (Q),
la troisième zone de paroi (43) est agencée sur la première zone de paroi (41) à une hauteur qui est 0,1 à 0,45 fois, de préférence 0,15 à 0,3 fois et de manière particulièrement préférée environ 0,2 fois la première hauteur (H₁) ou la seconde hauteur (H₂).

3. Élément formant bras oscillant (4) selon la revendication 2,
dans lequel
la troisième zone de paroi (43) s'étend avec une troisième hauteur (H₃) parallèlement au plan transversal (Q),
la troisième hauteur (H₃) est dans un ratio de 0,01 à 0,2, de préférence de 0,05 à 0,15 et de manière particulièrement préférée d'environ 0,08 à 0,1 par rapport à la première hauteur (H₁) et/ou à la seconde hauteur (H₂).

4. Élément formant bras oscillant (4) selon l'une des revendications précédentes,
comportant une face supérieure (45) et une face inférieure (46) et une zone de réception (5) pour immobiliser un tube d'essieu (2),
dans lequel
la face supérieure (45) et la face inférieure (46) sont agencées sur l'élément formant bras oscillant (4) de telle sorte que la direction de la force qui agit depuis le tube d'essieu (2) sur l'élément formant bras oscillant (4) s'étend sensiblement depuis la face inférieure (46) jusqu'à la face supérieure (45),
la troisième zone de paroi (43) est agencée plus près de la face inférieure (46) de l'élément formant bras oscillant (4) que de sa face supérieure (45).

5. Élément formant bras oscillant (4) selon l'une des revendications précédentes,
dans lequel
l'échancrure (44) présente une extension maximale (A) parallèlement à l'axe de basculement (S),
la première zone de paroi (41) et la seconde zone de paroi (42) présentent une distance moyenne (B) l'une de l'autre dans la zone de l'extension maximale (A) de l'échancrure,
l'extension maximale (A) de l'échancrure est dans un ratio de 0,4 à 0,9, de préférence de 0,6 à 0,8 et de manière particulièrement préférée d'environ 0,75 à 0,8 par rapport à la distance (B) des parois.

6. Élément formant bras oscillant (4) selon l'une des revendications précédentes,
dans lequel
la première zone de paroi (41) présente localement une courbure,
un premier plan d'extension (E₁) est disposé parallèlement au plan transversal (Q) et de telle sorte qu'un premier écart maximal (D₁) de la première zone de paroi (41) par rapport au premier plan d'extension (E₁) est minimisé,
le premier écart maximal (D₁) est dans un ratio de 0,05 à 0,3, de préférence de 0,1 à 0,3 et de manière particulièrement préférée d'environ 0,15 par rapport à une extension totale maximale (G) de l'élément formant bras oscillant (4) parallèlement à l'axe de basculement (S).

7. Élément formant bras oscillant (4) selon la revendication 6,
dans lequel
la seconde zone de paroi (42) présente localement une courbure,
un second plan d'extension (E₂) est disposé parallèlement au plan transversal (Q) et de telle sorte qu'un second écart maximal (D₂) de la seconde zone de paroi (42) par rapport au second plan d'extension (E₂) est minimisé,
le second écart maximal (D₂) est dans un ratio de 0,05 à 0,3, de préférence de 0,1 à 0,3 et de manière particulièrement préférée d'environ 0,15 par rapport à l'extension totale maximale (G).

8. Élément formant bras oscillant (4) selon l'une des revendications précédentes,
dans lequel
la zone de basculement (3) et les zones de paroi (41, 42, 43) sont réalisées d'un seul tenant et de préférence conjointement dans une étape de procédé.

9. Élément formant bras oscillant (4) selon l'une des revendications précédentes,
comportant une zone d'assemblage (6) réalisée sous forme d'échancrure et destinée à l'immobilisation par coopération de matière d'un tube d'essieu (2),
la zone d'assemblage (6) étant prévue à l'extrémité de l'élément formant bras oscillant (4) située à l'opposé de la zone de basculement (3).
